# EUROPÄISCHE PATENTSCHRIFT

(11) **EP 2 253 364 B1**
(45) Veröffentlichungstag und Bekanntmachung des Hinweises auf die Patenterteilung: **13.01.2016**
(21) Anmeldenummer: 10161982.3
(22) Anmeldetag: 05.05.2010
(51) Int. Cl.: B01D 19/04, C11D 3/00, C11D 3/16, C11D 3/37, C11D 17/06

(54) **SILICON ANTISCHAUMPARTIKEL**
SILICONE ANTIFOAM PARTICLES
PARTICULES ANTI-MOUSSE À BASE DE SILICONE

(30) Priorität: 18.05.2009 DE 102009003187
(43) Veröffentlichungstag der Anmeldung: 24.11.2010
(73) Patentinhaber: Wacker Chemie AG, 81737 München (DE)
(72) Erfinder: Becker, Richard, 84489, Burghausen (DE); Siegl, Herbert, 84489, Burghausen (DE)
(74) Vertreter: Fritz, Helmut

(56) Entgegenhaltungen:
- EP-A1- 0 323 532
- WO-A2-2004/069981
- DE-A1-102004 040 263
- GB-A- 2 001 099
- US-A- 4 561 992
- US-A- 4 563 187
- DATABASE WPI Week 198426 Thomson Scientific, London, GB; AN 1984-165127 XP002623644, & ZA 8 302 947 A (IMMUNOCHEM RES PTY) 10. Januar 1984 (1984-01-10)

## Beschreibung

Die Erfindung betrifft Antischaumpartikel enthaltend poröses Copolymer aus Harnstoff oder Melamin oder deren Gemischen mit einem Alkanal und eine flüssige Silicon Antischaumzusammensetzung.

Pulverförmige Silicon Antischaummittel sind bekannt. Diese können aus unterschiedlichen, für die unterschiedlichen Anwendungen geeigneten Trägermaterialien bestehen und werden beispielsweise zur Schaumkontrolle in Pulverwaschmitteln, als Bestandteil in Agrochemikalien und in redispergierbaren Polymerpulvern zur Ausrüstung von Baustoffen eingesetzt.

In DE 69421462 T2 sind teilchenförmige Schaumkontrollmittel beschrieben, bei denen das Silicon Antischaummittel auf einen Zeolithträger aufgetragen ist und mit einem Einkapselungsmittel bestehend aus Polycarboxylat umgeben ist. Um das Silicon Antischaummittel vor dem alkalischen Milieu des Zeolith Trägers zu schützen muß vor dem Auftragen des Silicon Antischaummittels auf das Trägermaterial ein Organopolysiloxan/Polyoxyalkylen-Copolymer aufgetragen werden. Nachteil dieses Verfahrens ist der vergleichsweise aufwendige Prozess.

Teilchenförmige Schaumkontrollmittel sind auch aus DE 10 2004 040 263 bekannt.

WO 2005/123892 A1 beschreibt Wirkstoffpartikel, die aus einem Kernmaterial bestehen, das aus Parfüm, Siliconöl, Wachs, Kohlenwasserstoffen, höheren Fettsäuren, Ölessenzen, Lipiden, Siliciumdioxid Partikeln und ähnlichen Wirkstoffen bestehen. Dieses Kernmaterial ist umhüllt mit einem Hüllmaterial aus Polymeren wie z.B. Polyharnstoffen. Der Nachteil ist dabei, dass ein aufwendiger Prozess für die Verkapselung des Wirkstoff enthaltenden Partikels eingesetzt werden muß, der u.a. bei erhöhter Temperatur durchgeführt werden muß.

In WO 2008/063625 A1 wird eine Partikelzusammensetzung beschrieben, die aus einem oder mehreren Partikeln die aus einem Kernmaterial und einer Hülle besteht. Das Kernmaterial kann u.a. Siliconöl, Siliciumdioxid Partikel, Schaumkontrollmittel oder Entschäumer sein, das Hüllmaterial u.a. Polyharnstoff. Wiederum dient hier der Polyharnstoff zur Umhüllung der Partikel und nicht als Trägermaterial für das Siliconöl. Für die Herstellung der verkapselten Materialien wird ein aufwendiges Herstellverfahren eingesetzt.

In WO 2004/069981 sind feste Partikel beschrieben, die ein poröses Copolymer aus Harnstoff oder Melamin oder deren Gemischen mit einem Alkanal und eine flüssige Siliconzusammensetzung enthalten.

GB 2001099 A und US 4563187 A beschreiben Reinigungsmittel für textile Oberflächen, die als Absorptionsmittel poröse Partikel aus Harnstoff-Formaldehyd-Harz enthalten.

Gegenstand der Erfindung sind Antischaumpartikel (P), enthaltend
(A) poröses Copolymer aus Harnstoff mit einem Alkanal und
(B) bei 0°C flüssige Silicon Antischaumzusammensetzung, die mindestens eine Organosiliciumverbindung (C) enthält, welche Einheiten der allgemeinen Formel (2)

Rₐ(R¹O)_{b}R²_{c}SiO_{(4-a-b-c)}/2 (2),

aufweist, worin
- **R**: Wasserstoffatom, einen einwertigen, SiC-gebundenen, gegebenenfalls substituierten, aliphatischen oder über aliphatische Gruppen an das Siliciumatom gebundenen aromatischen Kohlenwasserstoffrest mit 1 bis 18 C-Atomen,
- **R¹**: Wasserstoffatom oder einen einwertigen, gegebenenfalls substituierten Kohlenwasserstoffrest mit 1 bis 30 C-Atomen,
- **R²**: einen einwertigen, gegebenenfalls substituierten, aromatischen Kohlenwasserstoffrest mit 6 bis 18 C-Atomen, der über ein Ringkohlenstoffatom an das Siliciumatom angebunden ist und,
- **a, b, c**: die Werte 0, 1, 2 oder 3 bedeuten, mit der Maßgabe, dass die Summe a+b+c kleiner oder gleich 3 ist und pro Molekül in 1-100 %, bevorzugt in 10-60 %, besonders bevorzugt in 20-40 %, aller Einheiten der allgemeinen Formel (2) c verschieden 0 ist und in mindestens 50 % aller Einheiten der allgemeinen Formel (2) in der Organosiliciumverbindung die Summe a+b+c gleich 2 ist.

Das Copolymer (A) ist ein poröses Trägermaterial, welches die flüssige Silicon Antischaumzusammensetzung (B) sehr gut aufnimmt und sofort langsam und gleichmässig in wässrigen Systemen wieder freigibt. Dadurch kann die Silicon Antischaumzusammensetzung (B) in geringer Konzentration, z.B. in Waschmittel eingesetzt werden. Eine frühe Freisetzung der Antischaumzusammensetzung (B) im frühen Stadium des Waschprozesses wird so erreicht.

Die Antischaumpartikel (P) ergeben ein rieselfähiges, nicht verklumpendes Granulat, welches hervorragende Lagerbeständigkeit aufweist. Die Antischaumpartikel (P) sind sehr gut verträglich mit anderen porösen Trägermaterialien und können mit diesen zu einem pulverförmigen Antischaummittel abgemischt werden. Die Wirksamkeit des pulverförmigen Antischaummittels bleibt auch nach Lagerung bei erhöhter Temperatur und erhöhter Luftfeuchtigkeit beispielsweise in einer pulverförmigen Waschmittelmatrix auch über mehrere Monate hinweg erhalten.

Das Copolymer (A) ist vorzugsweise ein Kondensationsprodukt aus Harnstoff oder Melamin oder deren Gemischen mit einem Alkanal der allgemeinen Formel (1)

O=CH-R* (1),

wobei
- **R***: ein Wasserstoffatom oder ein Alkylrest mit 1 bis 6 C-Atomen ist.

Vorzugsweise ist **R*** ein Wasserstoffatom oder ein Methylrest.

Wenn bei der Herstellung von Copolymer (A) Harnstoff eingesetzt wird, so werden vorzugsweise mindestens 1,05 mol, insbesondere mindestens 1,1 mol Alkanal der allgemeinen Formel (1) und vorzugsweise höchstens 1,5 mol, insbesondere höchstens 1,4 mol Alkanal pro mol Harnstoff verwendet.

Vorzugsweise können 100 g Copolymer (A) bei 20°C und 1 bar mindestens 100 cm³, besonders bevorzugt mindestens 200 cm³, flüssige Antischaumzusammensetzung (B) aufnehmen.

Ein besonders bevorzugtes Copolymer (A) ist das Harnstoff-Formaldehyd-Copolymer, welches als PERGOPAK^{®} M von Albemarle Corp. erhältlich ist.

Das eingesetzte Copolymer (A) hat vorzugsweise eine Dichte von 1,3 - 1,6 g/cm³. Das Copolymer (A) wird vorzugsweise als Granulat mit einer Schüttdichte von 60 bis 80 kg/m³ eingesetzt. Die Teilchengröße der Primärteilchen beträgt vorzugsweise mindestens im Bereich von 0,05 µm, insbesondere mindestens 0,1 µm und vorzugsweise höchstens 2, besonders bevorzugt höchstens 1, insbesondere höchstens 0,5 µm. Die Primärteilchen agglomerieren bevorzugt zu grösseren Teilchen, wobei 80 %, insbesondere 90 % der Teilchen vorzugsweise im Bereich von 20 - 35 µm liegen.

Bevorzugt ist pro Molekül in 10-60 %, besonders bevorzugt in 20-40 %, aller Einheiten der allgemeinen Formel (2) **c** verschieden 0.

Bevorzugte Silicon Antischaumzusammensetzung (B) enthalten mindestens einen Zusatzstoff (D) ausgewählt aus
(D1) Füllstoffpartikeln und
(D2) Organopolysiloxanharz aus Einheiten der allgemeinen Formel (3)

R³_{d}(R⁴O)ₑSiO_{(4-d-e)/2} (3),

worin
- **R³, R⁴**: Wasserstoffatom oder einen einwertigen, gegebenenfalls substituierten Kohlenwasserstoffrest mit 1 bis 18 C-Atomen und,
**d, e** die Werte 0, 1, 2 oder 3 bedeuten,
mit der Maßgabe, dass die Summe **d+e**≤3 ist und in weniger als 50 % aller Einheiten der allgemeinen Formel (3) im Organopolysiloxanharz die Summe **d+e** gleich 2 ist.

Bevorzugte Silicon Antischaumzusammensetzung (B) enthalten eine Organosiliciumverbindung (E), welche
Einheiten der allgemeinen Formel (4)

R⁵_{g}(R⁶O)ₕSiO_{(4-g-h)/2} (4),

aufweist, worin
- **R⁵**: eine für **R** angegebene Bedeutung hat,
- **R⁶**: eine für **R¹** angegebene Bedeutung hat und
- **g, h**: die Werte 0, 1, 2 oder 3 bedeuten,
mit der Maßgabe, dass die Summe **g+h**≤3 ist und in mindestens 50 % aller Einheiten der allgemeinen Formel (4) in der Organosiliciumverbindung die Summe **g+h** gleich 2 ist.

In einer bevorzugten Variante enthält die Komponente (A) aromatische Reste, die direkt an das Siliciumatom gebunden sind. Das heißt, dass es eine kovalente Bindung zwischen einem Siliciumatom in der Einheit der allgmeinen Formel (2) und einem Kohlenstoffatom, welches zum aromatischen Ring gehört, gibt.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste, über aliphatische Gruppen an das Siliziumatom gebundene aromatische Gruppen, wie der Benzylrest, Phenylethylrest oder der 2-Phenylpropylrest.

Beispiele für substituierte Reste **R** sind 3,3,3-Trifluor-n-propylrest, Cyanoethyl-, Glycidoxy-n-propyl-, Polyalkylenglycol-n-propyl-, Amino-n-propyl-, Aminoethylamino-n-propyl- und Methacryloxy-n-propylreste.

Bevorzugt handelt es sich bei Rest **R** um Wasserstoffatom oder gegebenenfalls substituierte, aliphatische Kohlenwasserstoffreste mit 1 bis 10 Kohlenstoffatomen, besonders bevorzugt um aliphatische Kohlenwasserstoffreste mit 1 bis 4 Kohlenstoffatomen, insbesondere um den Methylrest.

Beispiele für Rest **R¹** sind Wasserstoffatom und die für Rest **R** und **R²** angegebenen Reste.

Bevorzugt handelt es sich bei Rest **R¹** um Wasserstoffatom oder gegebenenfalls substituierte Kohlenwasserstoffreste mit 1 bis 20 Kohlenstoffatomen, besonders bevorzugt um Wasserstoffatom oder Kohlenwasserstoffreste mit 1 bis 4 Kohlenstoffatomen, insbesondere um Methyl- oder Ethylreste.

Beispiele für **R²** sind Arylreste, wie Phenyl-, Toloyl-, Xylyl-, Cumyl-, Naphtyl-, Anthracylreste, bevorzugt Phenylrest.

Bevorzugt handelt es sich bei 10 bis 100 %, besonders bevorzugt 15 bis 50 %, der SiC-gebundenen Reste in der Komponente (C) um Reste **R².**

Bevorzugt ist **b** gleich 0 oder 1.

Bevorzugt ist **c** gleich 0, 1 oder 2.

Vorzugsweise haben weniger als 5 %, insbesondere weniger als 1 %, der Reste **R**, die Bedeutung von Wasserstoffatom.

Die als Komponente (C) eingesetzten Organosiliciumverbindungen enthaltend Einheiten der allgemeinen Formel (2) sind bevorzugt verzweigte oder lineare Organopolysiloxane, die besonders bevorzugt aus Einheiten der allgemeinen Formel (2) bestehen.

Im Rahmen der vorliegenden Erfindung sollen von dem Begriff Organopolysiloxane sowohl polymere, oligomere wie auch dimere Siloxane mitumfasst werden.

Beispiele für die Komponente (C) sind solche aus Einheiten Ph₃SiO_{1/2}-, Ph₂MeSiO_{1/2}-, PhMe₂SiO_{1/2}-, Ph₂SiO_{2/2}-, PhMeSiO_{2/2}- und PhSiO_{3/2}-, wobei Me gleich Methylrest und Ph gleich Phenylrest bedeutet, wie z.B.
lineare Polysiloxane der Formeln
Me₃SiO(Ph₂SiO)ₓ(Me₂SiO)_{z}SiMe₃,
Me₃SiO(PhMeSiO)_{y}(Me₂SiO)_{z}SiMe₃,
Me₃SiO(Ph₂SiO)ₓ(PhMeSiO)_{y}(Me₂SiO)_{z}SiMe₃ und
Me₃SiO(Ph₂SiO)ₓ(Me₂SiO)_{z}SiMe₃ sowie
verzweigte Polysiloxane der Formeln
MeSi[O(Ph₂SiO)ₓ(Me₂SiO)_{z}SiMe₃]₃,
PhSi[O(PhMeSiO)_{y}(Me₂SiO)_{z}SiMe₃]₃ und
Me₃SiO(Me₂SiO)_{z}[PhSiO(OMe₂SiO)_{z}SiMe₃]v(Me₂SiO)_{z}SiMe₃,
wobei die Koeffizienten **v, x, y** Werte größer gleich 1 annehmen und **z** 0 oder größer gleich 1 ist. Die Summe aus **v, x, y** und **z** bestimmt den Polymerisationsgrad, **v** die Anzahl von Verzweigungen, und damit die Viskosität.

Die Organosiliciumverbindungen (C) haben eine Viskosität von bevorzugt mindestens 10, besonders bevorzugt mindestens 100, insbesondere mindestens 500 mPas und bevorzugt höchstens 1 000 000, besonders bevorzugt höchstens 50 000, insbesondere höchstens 5 000 mPas, jeweils gemessen bei 25°C.

Die Organosiliciumverbindungen (C) sind handelsübliche Produkte bzw. können nach beliebigen, in der siliciumorganischen Chemie bisher bekannten Methoden hergestellt werden, wie z.B. durch Cohydrolyse der entsprechenden Silane.

Die Silicon Antischaumzusammensetzung (B) enthalten Zusatzstoff (D) in Mengen von bevorzugt mindestens 0,1, besonders bevorzugt mindestens 1 Gewichtsteilen und bevorzugt höchstens 30, besonders bevorzugt höchstens 15 Gewichtsteilen, jeweils bezogen auf 100 Gewichtsteile Komponente (C).

Als Zusatzstoff (D) kann ausschließlich um Komponente (D1), ausschließlich Komponente (D2) oder eine Mischung aus Komponenten (D1) und (D2) eingesetzt werden, wobei letzteres bevorzugt ist.

Bei der Komponente (D1) handelt es sich bevorzugt um pulverförmige, vorzugsweise pulverförmige hydrophobe, Füllstoffe.

Vorzugsweise weist Komponente (D1) eine BET-Oberfläche von 20 bis 1000 m²/g, eine Partikelgröße von weniger als 10 µm und eine Agglomeratgröße von weniger als 100 µm auf.

Beispiele für die Komponente (D1) sind Siliciumdioxid (Kieselsäuren), Titandioxid, Aluminiumoxid, Metallseifen, Quarzmehl, PTFE-Pulver, Fettsäureamide z.B. Ethylenbisstearamid und fein verteilte hydrophobe Polyurethane.

Vorzugsweise werden als Komponente (D1) Siliciumdioxid (Kieselsäuren), Titandioxid oder Aluminiumoxid mit einer BET-Oberfläche von 20 bis 1000 m²/g, einer Partikelgröße von weniger als 10 µm und einer Agglomeratgröße von weniger als 100 µm eingesetzt.

Besonders bevorzugt als Komponente (D1) sind Kieselsäuren, insbesondere solche mit einer BET-Oberfläche von 50 bis 800 m²/g. Diese Kieselsäuren können pyrogene oder gefällte Kieselsäuren sein. Es sind als Komponente (D1) sowohl vorbehandelte Kieselsäuren einsetzbar, also handelsübliche hydrophobe Kieselsäuren, als auch hydrophile Kieselsäuren.

Beispiele für hydrophobe Kieselsäuren, die erfindungsgemäß eingesetzt werden können, sind HDK^{®} H2000, eine pyrogene mit Hexamethyldisilazane behandelte Kieselsäure mit einer BET-Oberfläche von 140 m²/g (käuflich erhältlich bei der Wacker-Chemie AG, Deutschland) und eine gefällte mit Polydimethylsiloxan behandelte Kieselsäure mit einer BET-Oberfläche von 90 m²/g (käuflich erhältlich unter der Bezeichnung "Sipernat^{®} D10" bei der Degussa AG, Deutschland).

Falls als Komponente (D1) hydrophobe Kieselsäuren eingesetzt werden sollen, können hydrophile Kieselsäuren auch in situ hydrophobiert werden, wenn das für die gewünschte Wirksamkeit der Entschäumerformulierung vorteilhaft ist.

Beispiele für Rest **R³** sind Wasserstoffatom und die für Rest **R** und **R²** angegebenen Reste.

Bevorzugt handelt es sich bei Rest **R³** um gegebenenfalls substituierte Kohlenwasserstoffreste mit 1 bis 20 Kohlenstoffatomen, besonders bevorzugt um Kohlenwasserstoffreste mit 1 bis 6 Kohlenstoffatomen, insbesondere um den Methylrest.

Beispiele für Rest **R⁴** sind die für den Rest **R¹** angegebenen Reste.

Bevorzugt handelt es sich bei Rest **R⁴** um Wasserstoffatom oder um Kohlenwasserstoffreste mit 1 bis 4 Kohlenstoffatomen, insbesondere um Wasserstoffatom, Methyl- oder Ethylreste.

Bevorzugt ist der Wert für **d** gleich 3 oder 0.

Bei der gegebenenfalls eingesetzten Komponente (D2) handelt es sich bevorzugt um Siliconharze aus Einheiten der allgemeinen Formel (3), bei denen in weniger als 30%, bevorzugt in weniger als 5%, der Einheiten im Harz die Summe **d+e** gleich 2 ist.

Besonders bevorzugt handelt es sich bei Komponente (D2) um Organopolysiloxanharze, die zu mindestens 90 mol-% aus R³₃SiO_{1/2} (M)- und SiO_{4/2}(Q)-Einheiten bestehen mit **R³** gleich der obengenannten Bedeutung; diese Harze werden auch als MQ-Harze bezeichnet. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% freie Hydroxy- oder Alkoxygruppen enthalten.

Vorzugsweise haben diese Organopolysiloxanharze (B2) bei 25°C eine Viskosität größer 1000 mPas oder sind Feststoffe. Das mit Gelpermeationschromatografie bestimmte gewichtsmittlere Molekulargewicht (bezogen auf einen Polystyrolstandard) dieser Harze beträgt bevorzugt mindestens 200, besonders bevorzugt mindestens 1000 g/mol und bevorzugt höchstens 200 000, besonders bevorzugt höchstens 20 000 g/mol.

Komponente (D2) sind handelsübliche Produkte bzw. können nach in der Siliciumchemie gängigen Verfahren z.B. gemäß EP-A 927 733 hergestellt werden.

Falls es sich bei dem eingesetzten Zusatzstoff (D) um eine Mischung aus Komponenten (D1) und (D2) handelt, ist das Gewichtsverhältnis von (D1) zu (D2) in der Mischung bevorzugt 0,01 bis 50, besonders bevorzugt 0,1 bis 7.

Beispiele für Reste **R⁵** sind die für Rest **R** angegebenen Beispiele.

Bevorzugt handelt es sich bei Rest **R⁵** um Wasserstoffatom oder gegebenenfalls substituierte, aliphatische Kohlenwasserstoffreste mit 1 bis 20 Kohlenstoffatomen, besonders bevorzugt um aliphatische Kohlenwasserstoffreste mit 1 bis 4 Kohlenstoffatomen, insbesondere um den Methylrest.

Beispiele für Rest **R⁶** sind Wasserstoffatom und die für Rest **R** und **R²** angegebenen Reste.

Bevorzugt handelt es sich bei Rest **R⁶** um Wasserstoffatom oder gegebenenfalls substituierte Kohlenwasserstoffreste mit 1 bis 20 Kohlenstoffatomen, besonders bevorzugt um Wasserstoffatom oder Kohlenwasserstoffreste mit 1 bis 4 Kohlenstoffatomen, insbesondere um Methyl- oder Ethylreste.

Der Wert von g ist bevorzugt 1, 2 oder 3.

Der Wert von h ist bevorzugt 0 oder 1.

Die gegebenenfalls eingesetzten Organopolysiloxane (C) haben eine Viskosität von bevorzugt 10 bis 1 000 000 mm²/s bei 25°C.

Beispiele für gegebenenfalls eingesetzte Komponente (E) sind die für Komponente (A) angegebenen Beispiele,
wobei diese siliciumorganische Verbindung keine direkt an Silicium gebundenen aromatischen Reste **R²** enthält, wie etwa Polydimethylsiloxane mit Viskositäten von 100 bis 1 000 000 mPa·s bei 25°C. Diese Polydimethylsiloxane können z.B. durch den Einbau von R⁵SiO_{3/2}- oder SiO_{4/2}-Einheiten bis maximal 5% aller Einheiten verzweigt sein. Diese verzweigten oder anvernetzten Siloxane weisen dann viskoelastische Eigenschaften auf.

Bevorzugt weist die gegebenenfalls eingesetzte Komponente (E) mindestens 90 mol-%, insbesondere mindestens 95 mol-% Einheiten R⁵₂SiO_{2/2} auf. Besonders bevorzugt sind Polydimethylsiloxane, die mit Silanolgruppen und/oder mit Alkoxygruppen und/oder mit Trimethylsiloxygruppen terminiert sein können oder Siloxane mit Polyethergruppen. Derartige polyethermodifizierte Polysiloxane sind bekannt und z.B. in EP-A 1076073 beschrieben.

Insbesondere bevorzugt handelt es sich bei Komponente (E) um Organosiliciumverbindungen enthaltend Bausteine der allgemeinen Formel (4), worin **R⁵** einen Methylrest und **R⁶** einen linearen und/oder verzweigten Kohlenwasserstoffrest mit mindestens 6 Kohlenstoffatomen bedeuten, h einen durchschnittlichen Wert von 0,005 bis 0,5 annimmt und die Summe (g+h) einen durchschnittlichen Wert von 1,9 bis 2,1 hat. Derartige Produkte sind beispielsweise durch alkalisch katalysierte Kondensation von silanolterminierten Polydimethylsiloxanen einer Viskosität 50 bis 50 000 mPa·s bei 25°C und aliphatischen Alkoholen mit mehr als 6 Kohlenstoffatomen, wie Isotridecylalkohol, n-Octanol, Stearylalkohol, 4-Ethyl-hexadecanol oder Eicosanol, zugänglich.

Falls die Silicon Antischaumzusammensetzung (B) Komponente (E) enthält, handelt es sich um Mengen von bevorzugt mindestens 1, besonders bevorzugt mindestens 2 Gew.-Teile und bevorzugt höchstens 900, besonders bevorzugt höchstens 100, insbesondere höchstens 10 Gewichtsteile, jeweils bezogen auf 100 Gewichtsteile der Komponente (C).

Komponente (E) sind handelsübliche Produkte bzw. können nach in der Siliciumchemie gängigen Verfahren hergestellt werden.

Außer den Komponenten (C), (D) und gegebenenfalls (E) können die Silicon Antischaumzusammensetzung (B) alle weiteren Stoffe enthalten, wie sie auch bisher in Entschäumerformulierungen verwendet worden sind, wie organische Verbindungen (F), die in Wasser bei 25°C und einem Druck von 1013,25 hPa von maximal 2 Gewichtsprozent löslich sind.

Bei der gegebenenfalls eingesetzten Komponente (F) handelt es sich vorzugsweise um organische Verbindungen mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, Fettsäureestern, wie z.B. Octylstearat, Dodecylpalmitat, Fettalkoholen, Ethern niedermolekularer Alkohole, Phthalaten, Estern der Phosphorsäure und Wachsen.

Die Silicon Antischaumzusammensetzung (B) enthalten organische Verbindung (F) bevorzugt in Mengen von höchstens 1000, besonders bevorzugt höchstens 100 Gewichtsteile, jeweils bezogen auf 100 Gewichtsteile des Gesamtgewichts der Komponenten (C), (D) und gegebenenfalls (E).

Bevorzugt handelt es sich bei den Silicon
Antischaumzusammensetzung (B) um solche, die
100 Gewichtsteile einer Organosiliciumverbindung (C),
0,1 bis 30 Gewichtsteile eines Zusatzstoffs ausgewählt aus (D1) und (D2), gegebenenfalls
1 bis 900 Gewichtsteile Organosiliciumverbindungen (E) und gegebenenfalls
0 bis 10000, insbesondere 0 bis 1000 Gewichtsteile organische Verbindung (F) enthalten.

Die Silicon Antischaumzusammensetzung (B)sind bevorzugt viskose klare bis opake, farblose bis bräunliche Flüssigkeiten.

Die Silicon Antischaumzusammensetzung (B) haben vorzugsweise eine Viskosität von mindestens 10, besonders bevorzugt mindestens 2 000 mPas und bevorzugt höchstens 2 000 000, besonders bevorzugt höchstens 50 000, jeweils bei 25°C.

Bei den Silicon Antischaumzusammensetzung (B) kann es sich um Lösungen oder Dispersionen handeln.

Falls es sich bei den Silicon Antischaumzusammensetzung (B) um Emulsionen handelt, können alle Emulgatoren eingesetzt werden, die dem Fachmann zur Herstellung von Siliconemulsionen bekannt sind, wie z.B. anionische, kationische oder nichtionogene Emulgatoren. Bevorzugt werden Emulgatormischungen eingesetzt, wobei mindestens ein nichtionogener Emulgator, wie beispielsweise Sorbitanfettsäureestern, ethoxylierte Sorbitanfettsäureester, ethoxylierte Fettsäuren, ethoxylierte lineare oder verzweigte Alkoholen mit 10 bis 20 Kohlenstoffatomen und/oder Glycerinester, enthalten sein sollte. Weiterhin können als Verdicker bekannte Verbindungen, wie Polyacrylsäure, Polyacrylate, Celluloseether wie Carboxymethylcellulose und Hydroxyethylcellulose, natürliche Gume wie Xanthan Gum und Polyurethane sowie Konservierungsmittel und andere übliche und dem Fachmann bekannte zusätze zugesetzt werden.

Die kontinunierliche Phase der Emulsionen ist vorzugsweise Wasser. Es können jedoch auch Silicon Antischaumzusammensetzung (B) in Form von Emulsionen hergestellt werden, bei denen die kontinuierliche Phase durch die Komponenten (C), (D) und gegebenenfalls (E) gebildet oder durch Komponente (F) gebildet wird. Es kann sich dabei auch um multiple Emulsionen handeln.

Falls es sich bei der Silicon Antischaumzusammensetzung (B) um Emulsionen handelt, sind Öl in Wasser Emulsionen enthaltend 5 bis 50 Gew.-% Komponenten (C) bis (F), 1 bis 20 Gew.-% Emulgatoren und Verdicker und 30 bis 94 Gew.-% Wasser bevorzugt.

Gegenstand der Erfindung sind auch pulverförmige Antischaummittel, die Antischaumpartikel (P) sowie weitere Tägermaterialien enthalten.

Die Antischaumpartikel (P) können mit weiteren Trägermaterialien abgemischt sein, um die Pulvereigenschaften wie beispielsweise Zusammensetzung, Schüttdichte, Korngrößenverteilung und Schüttwinkel einzustellen. Falls das pulverförmige Antischaummittel in einem Pulverwaschmittel eingesetzt werden soll entspricht vorzugsweise die Schüttdichte des pulverförmigen Antischaummittel der Schüttdichte des Pulverwaschmittels, um eine Entmischung zwischen Antischaumpulver und Waschmittel, die bei großen Unterschieden in der Schüttdichte der beiden Komponenten auftreten würde, entgegenzuwirken.

In einem besonders vorteilhaften Verfahren zur Herstellung des pulverförmigen Antischaummittels wird die flüssige Silicon Antischaumzusammensetzung (B) zur Mischung aus Copolymer (A) und weiteren Trägermaterialien gegeben, insbesondere aufgesprüht. Dabei entstehen Antischaumpartikel (P), da Copolymer (A) besonders stark die flüssige Silicon Antischaumzusammensetzung (B) absorbiert.

Weitere Trägermaterialien umfassen wasserlösliche, wasserunlösliche und in Wasser dispergierbare Materialien. Beispiele für Trägermaterialien sind Sulfate, Carbonate, Phosphate, Polyphosphate, Siliciumdioxidsorten, Silicate, Tone, Stärken, Cellulosematerialien und Alumosilicate.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Herstellung eines Antischaumpulvers

In einem 500 ml Becher werden 127,5 g der festen Bestandteile als Trägerpulver vorgelegt und mit einem Flügelrührer wird diese Mischung homogenisiert. Anschließend werden 22,5 g (15%) flüssige Silicon Antischaumzusammensetzung mit einer Temperatur von ca. 80°C eingerührt und gut homogenisiert.

### Schaumprüfung in der Waschmaschine

Die schaumdämmende Wirkung der Antischaumpulver wurde in einer handelsüblichen Waschmaschine getestet. Getestet wurde in einer Waschmaschine der Firma Miele vom Typ Novotronic W 918.
130g handelsübliches, entschäumerfreies Pulverwaschmittel wurde mit 1,69 g (1,3%) Antischaumpulver vermengt. Die Schaumentwicklung dieser Pulvermischung wurde im Hauptwaschgang, zusammen mit 3,5 kg sauberer Baumwollwäsche, bei einer Temperatur von 40°C und einer Wasserhärte von 3° GH getestet. Die Schauglashöhe der Waschmaschine wurde in 6 gleich hohe Teile geteilt. Der während des Waschprozesses entstandene Schaum, wurde in einer Abstufung von 0 bis 6 abgelesen, wobei 0 schaumfrei und 6 einer maximalen Schaummenge entspricht.

### Klimalagerung von Waschpulverformulierungen mit Antischaumpulver

Die Mischungen aus Pulverwaschmittel mit Antischaumpulver wurden bei 35°C und 70 % relativer Luftfeuchtigkeit gelagert. Die Antischaumpulver hatten folgende Zusammensetzung:

### Vergleichsbeispiel V (nicht erfindungsgemäss):

| | |
|---|---|
| 40% | Natriumhydrogencarbonat |
| 45% | Kartoffelstärke |
| 15% | flüssige Silicon Antischaumzusammensetzung |

### Beispiel A

| | |
|---|---|
| 35% | Natriumhydrogencarbonat |
| 45% | Kartoffelstärke |
| 5% | PERGOPAK^{®} M von Albemarle Corp. |
| 15% | flüssige Silicon Antischaumzusammensetzung |

### Beispiel B

| | |
|---|---|
| 80% | Natriumhydrogencarbonat |
| 5% | PERGOPAK^{®} M von Albemarle Corp. |
| 15% | flüssige Silicon Antischaumzusammensetzung |

### Beispiel C

| | |
|---|---|
| 70% | Natriumhydrogencarbonat |
| 10% | Aeromyl 115 |
| 5% | PERGOPAK^{®} M von Albemarle Corp. |
| 15% | flüssige Silicon Antischaumzusammensetzung |

### Beispiel D

| | |
|---|---|
| 53% | Natriumhydrogencarbonat |
| 27% | Aeromyl 115 |
| 5% | PERGOPAK^{®} M von Albemarle Corp. |
| 15% | flüssige Silicon Antischaumzusammensetzung |

### Beispiel E

| | |
|---|---|
| 40% | Natriumhydrogencarbonat |
| 40% | Natriumsulfat |
| 5% | PERGOPAK^{®} M von Albemarle Corp. |
| 15% | flüssige Silicon Antischaumzusammensetzung |

**Tabelle 1:**

| Beispiele | | Schüttwinkel | Schüttdichte | Zeitraum der Klimalagerung | durchschnittliche Schaumentwicklung während des Waschprozesses (0 - 6) | | |
|---|---|---|---|---|---|---|---|
| | | | | | nach 0 - 20 Minuten | nach 21 - 40 Minuten | nach 41 - 55 Minuten |
| V*) | | n.m.**) | n.m.**) | - | - | - | - |
| A | | 35,8 | 0,62 | 4 Wochen | 0 | 0 | 0,9 |
| B | | 38,7 | 0,91 | 4 Wochen | 0 | 0,1 | 1,9 |
| | | | | 8 Wochen | 0 | 0,3 | 2,8 |
| C | | 35,8° | 0,88 | 4 Wochen 0 | | 0,1 | 1 |
| | | | | 8 Wochen | 0 | 0 | 0,6 |
| D | | 36,5° | 0,72 | 4 Wochen | 0 | 0,4 | 2,4 |
| | | | | 8 Wochen | 0 | 0,2 | 1,8 |
| E | | 37,2° | 0,95 | 4 Wochen | 0 | 0 | 0,7 |
| | | | | 8 Wochen | 0 | 0,2 | 0,9 |

| | | | | | | | |
|---|---|---|---|---|---|---|---|
| *) nicht erfindungsgemäss **) Pulver nicht rieselfähig | | | | | | | |

## Patentansprüche

1. Antischaumpartikel (P), enthaltend
(A) poröses Copolymer aus Harnstoff mit einem Alkanal und
(B) bei 0°C flüssige Silicon Antischaumzusammensetzung, die mindestens eine Organosiliciumverbindung (C) enthält, welche Einheiten der allgemeinen Formel (2)
Rₐ(R¹O)_{b}R²cSiO_{(4-a-b-c)}/2 (2),
aufweist, worin
**R** Wasserstoffatom, einen einwertigen, SiC-gebundenen, gegebenenfalls substituierten, aliphatischen oder über aliphatische Gruppen an das Siliciumatom gebundenen aromatischen Kohlenwasserstoffrest mit 1 bis 18 C-Atomen,
**R¹** Wasserstoffatom oder einen einwertigen, gegebenenfalls substituierten Kohlenwasserstoffrest mit 1 bis 30 C-Atomen,
**R²** einen einwertigen, gegebenenfalls substituierten, aromatischen Kohlenwasserstoffrest mit 6 bis 18 C-Atomen, der über ein Ringkohlenstoffatom an das Siliciumatom angebunden ist und,
**a, b, c** die Werte 0, 1, 2 oder 3 bedeuten, mit der Maßgabe, dass die Summe **a+b+c** kleiner oder gleich 3 ist und pro Molekül in 1-100 %, bevorzugt in 10-60 %, besonders bevorzugt in 20-40 %, aller Einheiten der allgemeinen Formel (2) c verschieden 0 ist und in mindestens 50 % aller Einheiten der allgemeinen Formel (2) in der Orgariosiliciumverbindung die Summe **a+b+c** gleich 2 ist.

2. Antischaumpartikel (P) nach Anspruch 1, bei dem das Copolymer (A) ein Kondensationsprodukt aus Harnstoff oder Melamin oder deren Gemischen mit einem Alkanal der allgemeinen Formel (1)
O=CH-R* (1),
ist, wobei
**R *** ein Wasserstoffatom oder ein Alkylrest mit 1 bis 6 C-Atomen ist.

3. Antischaumpartikel (P) nach Anspruch 1 oder 2, bei dem 100 g des Copolymeren (A) bei 20°C und 1 bar mindestens 100 cm³ flüssige Antischaumzusammensetzung (B) aufnimmt.

4. Antischaumpartikel (P) nach Anspruch 1 bis 3, bei dem die Silicon Antischaumzusammensetzung (B) mindestens einem Zusatzstoff (D) ausgewählt aus
(D1) Füllstoffpartikeln und
(D2) Organopolysiloxanharz aus Einheiten der allgemeinen Formel (3)
R³_{d}(R⁴O)ₑSiO_{(4-d-e)/2} (3),
enthält, worin
**R³, R⁴** Wasserstoffatom oder einen einwertigen, gegebenenfalls substituierten Kohlenwasserstoffrest mit 1 bis 18 C-Atomen und,
**d, e** die Werte 0, 1, 2 oder 3 bedeuten,
mit der Maßgabe, dass die Summe **d+e≤3** ist und in weniger als 50 % aller Einheiten der allgemeinen Formel (3) im Organopolysiloxanharz die Summe **d+e** gleich 2 ist.

5. Antischaumpartikel (P) nach Anspruch 1 bis 4, bei dem die Silicon Antischaumzusammensetzung (B) eine Organosiliciumverbindung (E) enthält, welche Einheiten der allgemeinen Formel (4)
R⁵_{g}(R⁶O)ₕSiO_{(4-g-h)/2} (4),
aufweist, worin
**R⁵** eine für **R** angegebene Bedeutung hat,
**R⁶** eine für **R¹** angegebene Bedeutung hat und
**g, h** die Werte O, 1, 2 oder 3 bedeuten, mit der Maßgabe, dass die Summe **g+h≤3** ist und in mindestens 50 % aller Einheiten der allgemeinen Formel (4) in der Organosiliciumverbindung die Summe **g+h** gleich 2 ist.

6. Pulverförmige Antischaummittel, die Antischaumpartikel (P) gemäß Anspruch 1 bis 5 sowie weitere Trägermaterialien enthalten.

7. Pulverförmige Antischaummittel nach Anspruch 6, bei denen die weiteren Trägermaterialien ausgewählt werden aus Sulfaten, Carbonaten, Phosphaten, Polyphosphaten, Siliciumdioxidsorten, Silicaten, Tonen, Stärken, Cellulosematerialien und Alumosilicaten.

## Claims

1. Antifoam particles (P) comprising
(A) porous copolymer of urea with an alkanal, and
(B) silicone antifoam composition which is liquid at 0°C and comprises at least one organosilicon compound (C) which has units of the general formula (2)
Rₐ(R¹O)_{b}R²_{c}SiO_{(4-a-b-c)/2} (2),
in which
**R** is hydrogen atom, a monovalent, SiC-bonded, optionally substituted aliphatic hydrocarbon radical, or aromatic hydrocarbon radical attached to the silicon atom via aliphatic groups, said radical having 1 to 18 C atoms,
**R¹** is hydrogen atom or a monovalent, optionally substituted hydrocarbon radical having 1 to 30 C atoms,
**R²** is a monovalent, optionally substituted aromatic hydrocarbon radical having 6 to 18 C atoms and attached to the silicon atom via a ring carbon atom, and
**a, b, and c** denote the values 0, 1, 2 or 3, with the proviso that the sum **a+b+c** is less than or equal to 3 and, per molecule, in 1-100%, preferably in 10-60%, more preferably in 20-40% of all the units of the general formula (2) c is other than 0, and in at least 50% of all the units of the general formula (2) in the organosilicon compound the sum **a+b+c** is 2.

2. Antifoam particles (P) according to Claim 1, wherein the copolymer (A) is a condensation product of urea or melamine or mixtures thereof with an alkanal of the general formula (1)
O=CH-R* (1),
where
**R*** is a hydrogen atom or an alkyl radical having 1 to 6 C atoms.

3. Antifoam particles (P) according to Claim 1 or 2, wherein 100 g of copolymer (A) takes up at least 100 cm³ of liquid antifoam composition (B) at 20°C and 1 bar.

4. Antifoam particles (P) according to any of Claims 1 to 3, wherein the silicone antifoam composition (B) comprises at least one additive (D) selected from
(D1) filler particles and
(D2) organopolysiloxane resin comprising units of the general formula (3)
R³_{d}(R⁴O)ₑSiO_{(4-d-e)/2} (3),
in which
**R³ and R⁴** are each hydrogen atom or a monovalent, optionally substituted hydrocarbon radical having 1 to 18 C atoms, and
**d and e** denote the values 0, 1, 2 or 3, with the proviso that the sum **d+e** is ≤ 3, and in less than 50% of all the units of the general formula (3) in the organopolysiloxane resin the sum **d+e** is 2.

5. Antifoam particles (P) according to any of Claims 1 to 4, wherein the silicone antifoam composition (B) comprises an organosilicon compound (E) which has units of the general formula (4)
R⁵g(R⁶O)ₕSiO_{(4-g-h)/2} (4),
in which
**R⁵** has a definition given for **R,**
**R⁶** has a definition given for **R¹,** and
**g and h** denote the values 0, 1, 2 or 3, with the proviso that the sum **g+h** is ≤ 3, and in at least 50% of all the units of the general formula (4) in the organosilicon compound the sum **g+h** is 2.

6. Pulverous antifoam agent which comprises antifoam particles (P) according to Claims 1 to 5 and also further carrier materials.

7. Pulverous antifoam agent according to Claim 6, wherein the further carrier materials are selected from sulfates, carbonates, phosphates, polyphosphates, silicon dioxide types, silicates, clays, starches, cellulose materials, and aluminosilicates.

## Revendications

1. Particules antimousses (P), contenant
(A) un copolymère poreux d'urée avec un alcanal et
(B) une composition antimousse à base de silicium, liquide à 0°C, qui contient au moins un composé organosilicié (C), qui présente des unités de formule générale (2)
Rₐ(R¹⁰)_{b}R²_{c}SiO_{(4-a-b-c)/2} (2),
dans laquelle
R représente un atome d'hydrogène, un radical hydrocarboné aromatique monovalent, lié par SiC, le cas échéant substitué, aliphatique ou lié via des groupes aliphatiques à l'atome de silicium, comprenant 1 à 18 atomes de carbone,
R¹ représente un atome d'hydrogène un radical hydrocarboné monovalent, le cas échéant substitué, comprenant 1 à 30 atomes de carbone,
R² représente un radical hydrocarboné aromatique monovalent, le cas échéant substitué, comprenant 6 à 18 atomes de carbone, qui est lié via un atome de carbone de cycle à l'atome de silicium et
a, b, c signifient les valeurs 0, 1, 2 ou 3 à condition que la somme a + b + c soit inférieure ou égale à 3 et que, par molécule, dans 1-100%, de préférence dans 10-60%, de manière particulièrement préférée dans 20-40%, de toutes les unités de formule générale (2), c soit différent de 0 et dans au moins 50% de toutes les unités de formule générale (2) dans le composé organosilicié, la somme a + b + c soit égale à 2.

2. Particules antimousses (P) selon la revendication 1, dans lesquelles le copolymère (A) est un produit de condensation d'urée ou de mélamine ou de leurs mélanges avec un alcanal de formule générale (1)
O=CH-R* (1),
dans laquelle
R* représente un atome d'hydrogène ou un radical alkyle comprenant 1 à 6 atomes de carbone.

3. Particules antimousses (P) selon la revendication 1 ou 2, dans lesquelles 100 g du copolymère (A) absorbe au moins 100 cm³ de composition antimousse liquide (B) à 20°C et à 1 bar.

4. Particules antimousses (P) selon la revendication 1 à 3, dans lesquelles la composition antimousse à base de silicium (B) contient au moins un additif (D) choisi parmi
(D1) des particules de charge et
(D2) une résine d'organopolysiloxane d'unités de formule générale (3)
R³_{d}(R⁴O)ₑSiO_{(4-d-e)/2} (3),
dans laquelle
R³, R⁴ représente un atome d'hydrogène ou un radical hydrocarboné monovalent, le cas échéant substitué, comprenant 1 à 18 atomes de carbone,
d, e signifient les valeurs 0, 1, 2 ou 3 à condition que la somme d + e ≤ 3 et que dans moins de 50% de toutes les unités de formule générale (3) dans la résine d'organopolysiloxane, la somme d + e soit égale à 2.

5. Particules antimousse (P) selon la revendication 1 à 4, dans lesquelles la composition antimousse (B) contient un composé organosilicié (E), qui présente des unités de formule générale (4)
R⁵_{g}(R⁶O)ₕSiO_{(4-g-h)/2} (4),
dans laquelle
R⁵ a une signification indiquée pour R,
R⁶ a une signification indiquée pour R¹ et
g, h signifient les valeurs 0, 1, 2 ou 3
à condition que la somme g + h ≤ 3 et que dans au moins 50% de toutes les unités de formule générale (4) dans le composé organosilicié, la somme g + h soit égale à 2.

6. Antimousses sous forme de poudre, qui contiennent des particules antimousses (P) selon la revendication 1 à 5 ainsi que d'autres matériaux support.

7. Antimousses sous forme de poudre selon la revendication 6, dans lesquelles les autres matériaux support sont choisis parmi les sulfates, les carbonates, les phosphates, les polyphosphates, les types de dioxydes de silicium, les silicates, les argiles, les amidons, les matériaux cellulosiques et les aluminosilicates.
